# EUROPÄISCHE PATENTSCHRIFT

(11) **EP 3 158 548 B1**
(45) Veröffentlichungstag und Bekanntmachung des Hinweises auf die Patenterteilung: **22.09.2021**
(21) Anmeldenummer: 15726061.3
(22) Anmeldetag: 21.05.2015
(51) Int. Cl.: G08G 1/04, G05D 1/02, G08G 1/14, B60W 30/06

(54) **VALET PARKING VERFAHREN UND SYSTEM**
VALET PARKING METHOD AND SYSTEM
PROCÉDÉ ET SYSTÈME DE VOITURIER AUTOMATIQUE

(30) Priorität: 17.06.2014 DE 102014211557
(43) Veröffentlichungstag der Anmeldung: 26.04.2017
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2015/061290
(87) Internationale Veröffentlichungsnummer: WO 2015/193059

(56) Entgegenhaltungen:
- DE-A1-102009 029 720
- DE-A1-102012 222 562
- US-A1- 2010 156 672
- US-A1- 2012 188 100
- IBISCH ANDRE ET AL: "Towards highly automated driving in a parking garage: General object localization and tracking using an environment-embedded camera system", 2014 IEEE INTELLIGENT VEHICLES SYMPOSIUM PROCEEDINGS, IEEE, 8. Juni 2014 (2014-06-08), Seiten 426-431, XP032620322, DOI: 10.1109/IVS.2014.6856567 [gefunden am 2014-07-15]

## Beschreibung

Die Erfindung betrifft ein Valet Parking-Verfahren und ein Valet-Parking System zum automatischen Verbringen eines Fahrzeugs zu einem zugewiesenen Parkplatz innerhalb eines vorgegebenen Parkraums.

Unter einem Valet-Parking Verfahren soll hierbei insbesondere ein Verfahren verstanden werden, bei dem ein Fahrer eines Fahrzeugs, dieses an einer vorbestimmten Abgabestelle abgeben kann, woraufhin das Fahrzeug - automatisiert oder durch Service-Personal geparkt wird und auf Wunsch oder Termin dem Fahrer wieder zur Verfügung gestellt wird. Die vorliegende Erfindung befasst sich speziell mit einem Valet-Parking Verfahren, bei dem Fahrzeuge durch ein automatisches System geparkt werden. Die Fahrzeuge bewegen sich dabei ohne Zutun eines menschlichen Fahrers zu einem zugewiesenen Parkplatz und wieder zurück zu einer Abholposition.

### Stand der Technik

Aus der US 2012188100 ist ein System für bewirtschaftete Parkflächen, ein sogenanntes Valet-Parking-System, bei dem die Zuweisung eines freien Parkplatzes an das Fahrzeug abhängig von der große des Fahrzeugs erfolgt.

Aus der DE 10 2012 222 562 ist ein System für bewirtschaftete Parkflächen, ein sogenanntes Valet-Parking-System, zur Überführung eines Fahrzeugs von einer Startposition in eine Zielposition bekannt. Dabei sind eine ortsfest angeordnete zentrale Recheneinheit zur Berechnung einer Bewegungsbahn, entlang der sich das Fahrzeug autonom in die Zielposition bewegt und eine Übertragungseinrichtung zur Übertragung der Bewegungsbahn an das Fahrzeug vorgesehen. Die zentrale Recheneinheit ist ausgebildet, Geschwindigkeitssteuersignale zu generieren und an die Übertragungseinrichtung zur Übertragung an das Fahrzeug zu übergeben, sodass sich das Fahrzeug gesteuert durch die Geschwindigkeitssteuersignale, entlang der Bewegungsbahn zur Zielposition bewegen kann.

Aus der US 2010/0156672 A1 ist ein System zum automatischen Valet-Parken bekannt. Das System umfasst eine zentrale Steuerung, Fahrzeugleitsensoren und Parkplatzsensoren. Die zentrale Steuerung kennt durch die Parkplatzsensoren den Belegungszustand eines jeden Stellplatzes. Ankommenden Fahrzeugen wird ein Stellplatz zugewiesen und es wird von der zentralen Steuerung ein Bewegungspfad zu diesem Stellplatz ermittelt. Position und Bewegung von Fahrzeugen werden mit den Fahrzeugleitsensoren erfasst und zusammen mit den Daten über den Bewegungspfad an das Fahrzeug übermittelt, so dass dieses autonom dem Pfad folgen kann. Bei der Auswahl des Stellplatzes können weitere Daten wie die durchschnittliche Verweildauer des jeweiligen Fahrzeugs verwendet werden. Beispielsweise können Fahrzeuge mit kurzer Verweildauer dichter an den Ausgängen geparkt werden.

Aus der DE 10 2009 046 912 A1 ist ein Verfahren bekannt, bei dem einem Fahrzeug an einer Startposition eine Trajektorie mitgeteilt wird, die das Fahrzeug zu einem freien Parkplatz führt. Auf den Verkehrsflächen sind ferner Markierungen vorgesehen, mit denen das Fahrzeug der Trajektorie folgen kann. Eine zentrale Überwachung der Positionen sämtlicher Fahrzeuge sowie eine zentrale Steuerung der Fahrzeuge sind nicht vorgesehen.

Die DE 10 2009 054 292 A1 betrifft ein Parkleitsystem, welches auf eine zentrale Sensorik verzichtet. Für das Erfassen der Parkraumsituation werden die in den Fahrzeugen vorhandenen Lokalisierungssysteme und Umfeldsensoren verwendet.

Die DE 10 2009 048 516 A1 beschreibt ein Parkleitsystem mit Sensoren zur Erkennung der Parksituation und variablen Parkplatzmarkierungen. Das System erfasst die Anzahl und Größe der Fahrzeuge und unterscheidet zumindest zwischen PKW und LKW. Mit Hilfe variabler Parkplatzmarkierungen kann das System die Ausnutzung des Parkraums verbessern, in dem die Anzahl der ausgewiesenen Parkflächen für PKW und LKW individuell angepasst wird.

Bei denjenigen bekannten Valet-Parking Systemen, bei denen ortsfeste Sensoren eingesetzt werden, um den aktuellen Belegungszustand des Parkraums und/oder die aktuellen Positionen der autonom parkenden oder wartenden Fahrzeuge zu überwachen, besteht das Problem, dass der Erfassungsbereich dieser Sensoren durch ungünstig geparkte Fahrzeuge, insbesondere sehr große bzw. hohe Fahrzeuge, oder durch räumliche Gegebenheiten des Parkraums, wie beispielsweise Säulen, eingeschränkt werden kann. Dadurch stehen einem zentralen Steuerungssystem des Valet-Parking Systems gegebenenfalls nicht mehr genügend Informationen zur Verfügung um den zur Verfügung stehenden Parkraum ideal auszunutzen oder das sichere Verbringen der autonom fahrenden Fahrzeuge zu ihren zugewiesenen Parkplätzen und/oder zu einem Abholbereich zu gewährleisten. Bekannte Systeme setzten zur Lösung dieses Problems beispielsweise eine Vielzahl von Sensoren ein, so dass beispielsweise jeder einzelne Parkplatz oder zwei gegenüberliegende Parkplätze von jeweils einem Sensor überwacht werden. Diese Lösungen sind aufwändig und kostenintensiv.

### Offenbarung der Erfindung

Erfindungsgemäß wird ein Valet-Parking System zum automatischen Verbringen eines Fahrzeugs zu einem Parkplatz innerhalb eines vorgegebenen Parkraums vorgeschlagen. Dabei ist vorgesehen, dass sich das Fahrzeug autonom zu dem zugewiesenen Parkplatz bewegt. Das Valet-Parking-System umfasst eine zentrale Steuerungseinheit und ein Parkplatzüberwachungssystem mit mindestens einem ortsfest angeordneten Parkplatzsensor. Das Parkplatzüberwachungssystem ist ausgebildet, insbesondere fortlaufend, den aktuellen Belegungszustand der Parkplätze des Parkraums zu erfassen und den aktuellen Belegungszustand an die zentrale Steuereinheit zu übermitteln. Zusätzlich oder alternativ ist das Parkplatzüberwachungssystem ausgebildet, alle autonom fahrenden oder wartenden Fahrzeuge, die aktuell innerhalb des Parkraums unterwegs sind, entweder um zu ihrem zugewiesenen Parkplatz verbracht zu werden, oder um beispielsweise an einem vorgegebenen Abholpunkt von ihrem Fahrer entgegengenommen zu werden, zu lokalisieren und Informationen über die aktuelle Fahrzeugposition all dieser Fahrzeuge an die zentrale Steuereinheit zu übermitteln. Bevorzugt ist mindestens einer der Parkplatzsensoren des Parkplatzüberwachungssystem als 2D-Kamera oder als 3D-Kamera ausgebildet ist.

Die zentrale Steuereinheit ist ausgebildet, einem Fahrzeug einen freien Parkplatz zuzuweisen und Informationen an das Fahrzeug zu übermitteln, so dass das Fahrzeug entlang einer Trajektorie autonom zu dem zugewiesenen Parkplatz fahren kann. Dazu kann die zentrale Steuereinheit, beispielsweise über eine drahtlose Datenverbindung, Positionsinformationen über den zugewiesenen Parkplatz an das Fahrzeug übermitteln, die es dem Fahrzeug erlauben, den zugewiesenen Parkplatz autonom anzufahren. Es können dazu beispielsweise auch Informationen über eine Trajektorie von der zentralen Steuereinheit an das Fahrzeug übermittelt werden, so dass das Fahrzeug autonom entlang der Trajektorie den zugewiesenen Parkplatz anfahren kann. Die Trajektorie kann dazu beispielsweise entsprechende Richtungsinformation, Lenkwinkelinformationen und Geschwindigkeitsinformationen enthalten. Außerdem kann die Trajektorie Informationen zu Positionen und Dauern von Zwischenstopps enthalten, die gegebenenfalls nötig sind, wenn mehrere Fahrzeuge gleichzeitig innerhalb eines räumlich engen Parkraums autonom manövrieren. Insbesondere kann die Trajektorie fortlaufend abhängig von aktuellen Informationen des Parkplatzüberwachungssystems angepasst werden und die jeweils angepasste Trajektorie an das Fahrzeug übermittelt werden. So können Kollisionen mit ungeplant auftretenden Objekten wirksam vermieden werden.

Erfindungsgemäß ist vorgesehen, dass die Zuweisung eines freien Parkplatzes an das Fahrzeug durch die zentrale Steuereinheit abhängig von den geometrischen Abmessungen, insbesondere der Höhe, des Fahrzeugs erfolgt. Dadurch wird sichergestellt, dass der Erfassungsbereich der ortsfest angeordneten Parkplatzsensoren des Parkplatzüberwachungssystems nicht durch ungünstig abgestellte Fahrzeuge verdeckt wird. Insbesondere bei Parkhäusern, in denen Parkplatzsensoren häufig zentral an der Parkhausdecke angebracht sind, können Fahrzeuge mit großer Höhe, den "Blick" eines Parkplatzsensors auf einen dahinterliegenden Parkplatz versperren, so dass der Belegungszustand dieses Parkplatzes nicht mehr eindeutig durch das Parkplatzüberwachungssystem bestimmbar ist oder mehrere Parkplatzsensoren benötigt werden. Durch die erfindungsgemäße Zuweisung eines freien Parkplatzes abhängig von den geometrischen Abmessungen, insbesondere der Höhe, des Fahrzeugs wird sichergestellt, dass stets der Belegungszustand aller Parkplätze des Parkraums durch das Parkplatzüberwachungssystem erfassbar ist und dass Objekte im Parkraum, die eine Anpassung der Ein- oder Ausparktrajektorie nötig machen würden, stets zuverlässig erkannt werden, und gleichzeitig die Anzahl der Parkplatzsensoren minimal gehalten werden kann.

Erfindungsgemäß erfolgt dazu die Zuweisung eines freien Parkplatzes an das Fahrzeug derart, dass eine Verdeckung des Erfassungsbereichs der Parkplatzsensoren des Parkplatzüberwachungssystems durch das geparkte Fahrzeug minimiert ist. Dabei wird insbesondere von einer durchschnittlichen Größenverteilung von Fahrzeugen ausgegangen, die beispielsweise durch statistische Erhebungen bestimmt werden kann.

Bevorzugt sind der oder die Parkplatzsensoren des Parkplatzüberwachungssystems derart angeordnet, dass der gesamte Erfassungsbereich des Parkplatzüberwachungssystems eine maximale Anzahl von Parkplätzen und/oder alle Zufahrtswege und Manövrierbereiche zwischen den Parkplätzen erfasst.

Bevorzugt sind Mittel zur Bestimmung der geometrischen Abmessungen, insbesondere der Höhe, des Fahrzeugs vorgesehen. Beispielsweise kann die Fahrzeughöhe durch entsprechende Sensoren bei der Einfahrt des Fahrzeugs und vor der Zuweisung eines Parkplatzes gemessen werden und der Messwert an die zentrale Steuereinheit übermittelt werden. Zusätzlich oder alternativ kann auch der Fahrzeug-Typ bzw. das Fahrzeug-Modell erkannt werden und die geometrischen Daten zu dem entsprechenden Fahrzeug-Typ einer, insbesondere in der zentralen Steuereinheit oder einem anderen Datenspeicher hinterlegten, Tabelle entnommen werden.

Die Erfindung betrifft weiterhin ein Verfahren zur Auslegung eines wie oben beschriebenen Valet-Parking Systems. Erfindungsgemäß erfolgt dabei die Wahl der Anzahl und Platzierung der ortsfesten Parkplatzsensoren des Parkplatzüberwachungssystems derart, dass stets, also bei allen denkbaren Belegungszuständen des Parkraums, eine ausreichende Erfassung des Belegungszustands aller Parkplätze des vorgegebenen Parkraums und/oder aller Positionen der autonom fahrenden oder wartenden Fahrzeuge durch das Parkplatzüberwachungssystem gegeben ist. Dies wird insbesondere erreicht, indem die Parkplatzsensoren platziert werden, indem eine Belegung des vorgegebenen Parkraums mit Fahrzeugen einer durchschnittlichen Größenverteilung angenommen wird. Außerdem wird erfindungsgemäß vorausgesetzt, dass eine Zuweisung der Parkplätze an die Fahrzeuge erfindungsgemäß abhängig von deren jeweiligen geometrischen Abmessungen, insbesondere der Fahrzeughöhe erfolgt.

Bevorzugt werden bei der Bestimmung der Anzahl und der Platzierung der Parkplatzsensoren außerdem geometrische Eigenschaften des vorgegebenen Parkraums und möglicher Sichtverdeckungen, wie beispielsweise Pfeilern, Säulen, oder Mauern berücksichtigt.

Die Erfindung betrifft außerdem ein Verfahren zum automatischen Verbringen eines Fahrzeugs zu einem zugewiesenen Parkplatz innerhalb eines vorgegebenen Parkraums, wobei der aktuelle Belegungszustand der Parkplätze des Parkraums und/oder die aktuelle Position autonom fahrenden oder wartender Fahrzeuge innerhalb des Parkraums durch ein Parkplatzüberwachungssystem mit mindestens einen Parkplatzsensor fortlaufend erfasst wird und der aktuelle Belegungszustand und/oder die aktuelle Position der autonom fahrenden oder wartenden Fahrzeuge an eine zentrale Steuereinheit übermittelt wird. Die zentrale Steuereinheit weist einem ankommenden Fahrzeug auf Anfrage einen freien Parkplatz zu und übermittelt Informationen an das Fahrzeug, so dass das Fahrzeug entlang einer Trajektorie autonom - also ohne Zutun des Fahrers - zu dem zugewiesenen Parkplatz verbracht werden kann. Insbesondere kann die Trajektorie fortlaufend abhängig von aktuellen Informationen des Parkplatzüberwachungssystems angepasst werden. So können Kollisionen mit zufällig innerhalb des vorgegebenen Parkraums auftretenden Objekten wirksam vermieden werden.

Erfindungsgemäß erfolgt die Zuweisung eines freien Parkplatzes und/oder eine Zuweisung einer Trajektorie an das Fahrzeug abhängig von der Größe, insbesondere der Höhe, des Fahrzeugs, derart dass eine Verdeckung des Erfassungsbereichs der Parkplatzsensoren durch das Fahrzeug während und/oder nach dem Parkvorgang minimiert wird.

Der vorliegenden Erfindung liegt die Idee zugrunde, bei einem Valet-Parking System für automatisiert fahrender Fahrzeuge, die zur Verfügung stehenden Parkplätze derart einem Fahrzeug zuzuweisen, dass in Abhängigkeit der jeweiligen Fahrzeuggröße, insbesondere der Fahrzeughöhe, eine geringstmögliche Verdeckung des Erfassungsbereichs der vorgesehen Parkplatzsensoren erfolgt. Damit wird die Lokalisierung der Fahrzeuge mittels Infrastrukturgebundener, also ortfester, Sensorik robust umgesetzt, die Investitionskosten durch eine minimale Anzahl an Sensoren und weiterer Hardware gering gehalten. Weiterhin wird eine optimierte Nutzung des zur Verfügung stehenden Parkraums erzielt.

Das Verfahren bleibt nicht nur auf Einparksituationen beschränkt sondern adressiert auch die Lokalisierung von Fahrzeugen auf Zubringerstrecken, für die sich Sichtverdeckungen durch geparkte Fahrzeuge ergeben können.

Ferner umfasst die Erfindungsmeldung auch Verfahren zur optimalen Positionierung von Parkplatzsensoren, wie beispielsweise Video-Kamera-Systemen, bei einer gegebenen 3D-Beschreibung der Parkumgebung bzw. des Parkraums, einschließlich aller Parkflächen zur Minimierung der Investitionskosten. Mittels einer durchschnittlich zu erwartenden Größenverteilung der parkenden Fahrzeuge wird über geometrische Betrachtungen des Erfassungsbereichs ("Field of View") des geplanten Sensorsystems und möglicher Sichtverdeckungen ermittelt, an welchen Positionen der gegebenen Geometrie des Parkraums Sensoren angebracht werden müssen, damit in allen Situationen und Belegungszuständen des Parkraums und stets eine ausreichende Sichtbarkeit der parkenden und wartenden Fahrzeuge gewährleistet ist.

Die Vorteile dieser Erfindung liegen in einer Steigerung der Robustheit der Lokalisierung von automatisiert fahrenden Fahrzeugen in Valet-Parking Systemen, die auf infrastrukturgebunden Lokalisierungssensoren (z.B. eine an einer Decke eines Parkhauses verbaute Videosensorik) sowie in der Minimierung der Investitionskosten durch eine optimierte Anzahl an Umfeldsensoren.

Die Erfindung wird nun anhand von Figuren und weiteren Ausführungsbeispielen beschrieben.

### Kurze Beschreibung der Figuren

Figur 1 zeigt einen unbelegten Parkraum, der Teil eines Valet-Parking Systems, ist, wobei ein fest installierter Parkplatzsensor als Parkplatzüberwachungssystem vorgesehen ist.
Figur 2 zeigt einen teilweise belegten Parkraum, der Teil eines Valet-Parking Systems ist.
Figur 3 zeigt eine Sensoranordnung eines Valet-Parking Systems nach dem Stand der Technik.
Figur 4 zeigt einen teilweise belegten Parkraum, der Teil eines Valet-Parking Systems ist, wobei die Zuweisung der Parkplätze erfindungsgemäß abhängig von der Fahrzeuggröße bzw. der Fahrzeughöhe erfolgt ist.

### Ausführungen der Erfindung

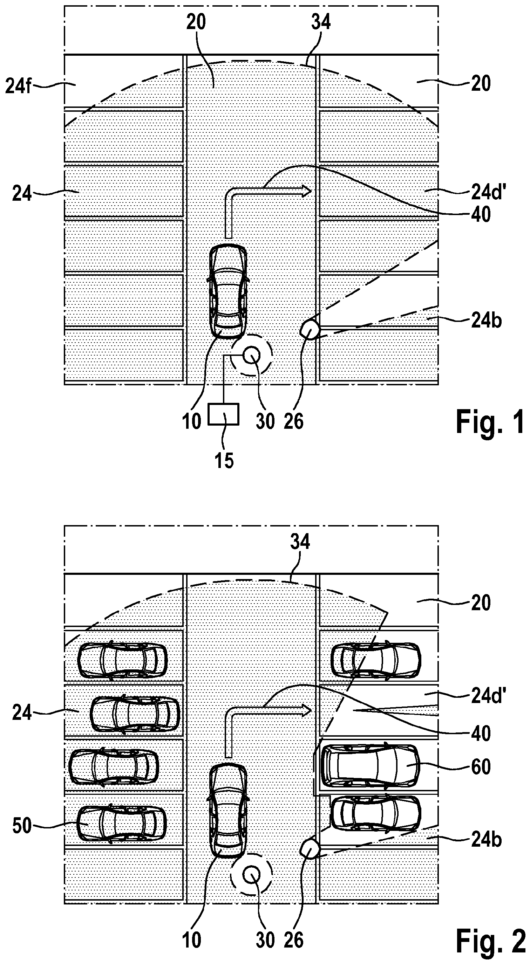

In Figur 1 ist ein Parkraum 20 mit mehreren Parkplätzen 24 in Vogelperspektive dargestellt. Es kann sich bei dem Parkraum 20 beispielsweise um eine Ebene eines Parkhauses oder um eine Parkfläche im Freien handeln. Ein Fahrzeug 10 ist im Begriff autonom entlang einer Trajektorie 40 zu einem zugewiesenen Parkplatz 24' zu fahren. Das Fahrzeug 10 muss dazu ausgebildet sein, sich autonom, also ohne Beisein oder Zutun eines Fahrers, zu einem bestimmten Ziel 24' zu bewegen. Beispielsweise fährt das Fahrzeug 10 selbsttätig entlang einer bestimmten Trajektorie 40, oder eine entsprechende Steuereinheit des Fahrzeugs berechnet abhängig von erfassten oder empfangenen Umfeldinformationen selbst eine Trajektorie 40 und veranlasst das Fahrzeug 10, diese abzufahren. Derartige autonome Fahrzeuge 10 sind in vielfältigen Ausführungen aus dem Stand der Technik bekannt und sollen daher an dieser Stelle nicht weiter diskutiert werden.

Im vorderen Bereich weist der Parkraum 20 einen einzelnen als Videokamera ausgebildeten Parkplatzsensor 30 mit einem Erfassungsbereich 34 auf, der Teil eines Parkplatzüberwachungssystems ist. Das Parkplatzüberwachungssystem erfasst fortlaufend mittels des Parkplatzsensors 30 den aktuellen Belegungszustand der Parkplätze 24 und übermittelt diesen an eine zentrale Steuereinheit 15, beispielsweise einen Rechner oder Server. Die Übermittlung kann drahtgebunden oder drahtlos mittels bekannter Datenübertragungsmethoden erfolgen. Weiterhin kann das Parkplatzüberwachungssystem die aktuelle Position eines oder mehrerer Fahrzeuge 10 bestimmen, die zu einem gegebenen Zeitpunkt innerhalb des Parkraumes 20 unterwegs sind, also nicht abgestellt sind, sondern sich auf dem Weg von oder zu einem Parkplatz 24 befinden. Diese Positionsinformationen fahrender oder wartender Fahrzeuge 10 werden ebenfalls an die zentrale Steuereinheit 15 übermittelt.

Auf Anfrage, z.B. durch einen Kunden des Valet-Parking Systems, der sein Fahrzeug abstellen lassen möchte, weist die zentrale Steuereinheit 15 dem Fahrzeug 10 einen freien Parkplatz 24' zu und übermittelt dem Fahrzeug 10 die benötigten Informationen, so dass das Fahrzeug 10 autonom den Parkplatz 24' ansteuern kann. Diese Informationen können beispielsweise eine Trajektorie 40 beinhalten, also Weginformationen, die von dem Fahrzeug 10 bzw. einer Steuerungseinheit des Fahrzeugs 10 verarbeitet werden, so dass sich das Fahrzeug 10 autonom entlang der Trajektorie 40 zu dem zugewiesenen Parkplatz 24' bewegt. Alternativ oder zusätzlich ist denkbar, dass die zentrale Steuereinheit 15 dem Fahrzeug 10 Zielinformationen, beispielsweise die Koordinaten des zugewiesenen Parkplatzes 24', übermittelt, so dass eine Steuerungseinheit des Fahrzeugs 10 gegebenenfalls eigenständig eine Trajektorie 40 erzeugen kann, entlang derer das Fahrzeug 10 zu dem zugewiesenen Parkplatz 24' fährt. Insbesondere kann die Trajektorie 40 fortlaufend abhängig von aktuellen Informationen des Parkplatzüberwachungssystems angepasst werden. So können Kollisionen mit zufällig auftretenden Objekten wirksam vermieden werden.

Die Trajektorie 40 kann vorteilhaft auch Geschwindigkeitsinformationen beinhalten, auch im Bezug auf Wartepositionen, die auf andere sich innerhalb des Parkraums 20 bewegende Fahrzeuge abgestimmt sind, so dass sich ein reibungsloser Ablauf, auch bei dichter Belegung des Parkraums 20 und hoher Frequenz von Ein- und Ausparkvorgängen ergibt.

Aus Figur 1 ist ersichtlich, dass der einzelne Parkplatzsensor 30 so platziert ist, dass sich alle Parkplätze 24 zumindest teilweise innerhalb des Erfassungsbereichs 34 des Parkplatzsensors 30 befinden. Obwohl beispielsweise der Parkplatz 24f aufgrund seiner räumlichen Entfernung zum Parkplatzsensor 30 und der Parkplatz 24b aufgrund eines sichtversperrenden Hindernisses 26 (beispielsweise ein Stützpfeiler) nur teilweise von dem Parkplatzsensor eingesehen werden können, ist der einsehbare Anteil aller Parkplätze 24 groß genug, dass der aktuelle Belegungszustand jedes Parkplatzes 24 von dem Parkplatzsensors 30 erfasst werden kann.

Dass dies jedoch nur dann gilt, wenn alle Parkplätze 24 des Parkraums 20 unbelegt sind, geht aus Figur 2 hervor: Ist der Parkraum 20 bereits durch abgestellte Fahrzeuge 50, 60 teilweise belegt, dann können sich insbesondere durch große bzw. hohe Fahrzeuge 60, wie beispielsweise einem Kleintransporter oder einem Fahrzeug der Multi-Van-Kategorie, Sichtverdeckungen des Erfassungsbereichs 34 des Parkplatzsensors 30 ergeben, die dazu führen, dass der Belegungszustand bestimmter Parkplätze, wie hier des Parkplatzes 24d', nicht mehr eindeutig erfasst werden kann und das einzuparkende Fahrzeug 10 auf dem letzten Wegstück der Trajektorie 40 nicht mehr genau lokalisiert und eine genaue Regelung zur Erreichung der Zielposition nicht mehr gewährleistet werden kann. Als Folge können Sachschäden durch Kollisionen mit Objekten, die sich außerhalb des Erfassungsbereichs 34 befinden, nicht zuverlässig vermieden werden.

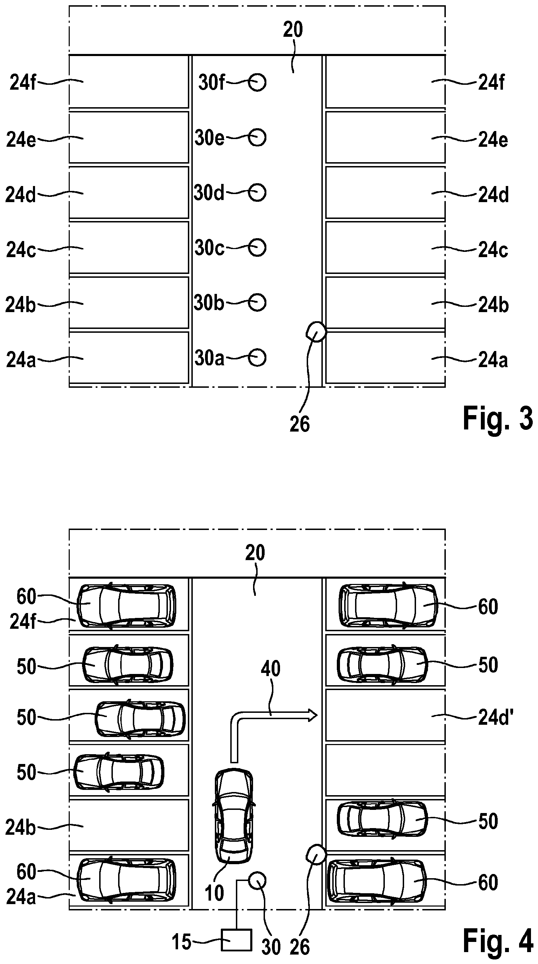

Eine aus dem Stand der Technik bekannte Lösung dieses Problems ist in Figur 3 gezeigt. Um eine optimale Erfassung aller Parkflächen 24 zur Vermeidung von Sachschäden zu erzielen, ohne Sichtverdeckung des Erfassungsbereichs 34 durch abgestellte Fahrzeuge 50, 60 erfahren zu müssen, ist zwischen jedem Paar von lateral gegenüberliegenden Parkplätzen 24a-24f jeweils ein Parkplatzsensor 30a-30f positioniert. Durch die Vielzahl der benötigten Parkplatzsensoren 30a-30f ergeben sich hohe Investitionskosten.

In Figur 4 ist eine erfindungsgemäße Zuweisung von Parkplätzen 24 dargestellt. Das erfindungsgemäße Verfahren sieht nun vor, die Fahrzeuggröße zu bestimmen, beispielsweise durch eine Messung der Fahrzeughöhe beim Einfahren in den Parkraum 20, oder durch Abgleich mit abgelegten Daten zur Fahrzeuggröße eines bestimmten Fahrzeugtyps, und den zugewiesenen Parkplatz 24' abhängig von der Fahrzeuggröße derart auszuwählen, dass eine maximale Sichtbarkeit der Parkplätze durch die Parkplatzsensoren 30 erreicht werden kann. Dazu werden in diesem Beispiel die größten zu erwartenden Fahrzeuge 60 unmittelbar lateral zum Parkplatzsensor 30 auf Parkplatz 24a und am entferntesten Erfassungsbereich auf Parkplatz 24f abgestellt. Dazwischen werden den Fahrzeugen 50 über ein heuristisches Verfahren Parkplätze derart zugewiesen, dass nahe beim Parkplatzsensor 30 insbesondere kleinere Fahrzeuge, z.B. vom Typ Smart oder ähnliches, abgestellt werden und mit wachsender Entfernung zum Parkplatzsensor 30, die Fahrzeuggröße ansteigt. Dies erlaubt, dass der Parkplatzsensor 30 stets noch zumindest den oberen Teil eines Fahrzeuges erfassen kann, während dieses in die Parklücke gesteuert wird.

Es wird deutlich, dass in diesem Beispiel trotz einer Belegung des Parkraums 20 mit vielen Fahrzeugen 50, 60 unterschiedlicher Größe und insbesondere unterschiedlicher Fahrzeughöhe eine optimale Erfassung des Parkraums 20 durch einen einzigen Parkplatzsensor 30 erfolgen kann und im Gegensatz zu der in Figur 3 gezeigten Situation keine Vielzahl von Parkplatzsensoren 30 benötigt wird. Das erfindungsgemäße Prinzip kann selbstverständlich auch auf komplexer aufgebaute Parkräume, wie beispielsweise Parkhäuser mit mehreren Ebenen angewandt werden. Durch Annahme einer durchschnittlichen Größenverteilung von Fahrzeugen 50, 60, die das Valet-Parking-System nutzen werden und den bekannten räumlichen und geometrischen Eigenschaften des Parkraums 20 und der Parkplätze 24 kann erfindungsgemäß eine optimierte Auslegung des Parkplatzüberwachungssystems im Bezug auf Anzahl und Platzierung der benötigten Parkplatzsensoren 30 erfolgen.

Die Erfindung in all ihren Aspekten trägt dazu bei, sowohl die Sicherheit als auch die Investitionskosten von Valet-Parking Systemen zu optimieren.

## Patentansprüche

1. Valet-Parking System zum automatischen Verbringen eines Fahrzeugs (10, 50, 60) zu einem zugewiesenen Parkplatz (24) innerhalb eines vorgegebenen Parkraums (20), umfassend eine zentrale Steuerungseinheit (15) und ein Parkplatzüberwachungssystem mit mindestens einen ortsfest angeordneten Parkplatzsensor (30),
wobei das Parkplatzüberwachungssystem ausgebildet ist, den Belegungszustand der Parkplätze (24) des Parkraums (20) zu erfassen und den aktuellen Belegungszustand an die zentrale Steuereinheit (15) zu übermitteln und/oder innerhalb des vorgegebenen Parkraums (20) autonom fahrende oder wartende Fahrzeuge (10) zu lokalisieren und Informationen über die aktuelle Fahrzeugposition an die zentrale Steuereinheit (15) zu übermitteln,
wobei die zentrale Steuereinheit (15) ausgebildet ist, einem Fahrzeug (10, 50, 60) einen freien Parkplatz (24) zuzuweisen und Informationen an das Fahrzeug (10, 50, 60) zu übermitteln, so dass das Fahrzeug (10, 50, 60) entlang einer Trajektorie (40) autonom zu dem zugewiesenen Parkplatz (24) verbracht werden kann,
wobei die Zuweisung eines freien Parkplatzes (24) an das Fahrzeug abhängig von den geometrischen Abmessungen, insbesondere der Höhe, des Fahrzeugs (10, 50, 60) erfolgt,
**dadurch gekennzeichnet, dass** die Zuweisung eines freien Parkplatzes (24) an das Fahrzeug derart erfolgt, dass eine Verdeckung des Erfassungsbereichs (34) der Parkplatzsensoren (30) des Parkplatzüberwachungssystems durch das geparkte Fahrzeug (50, 60) minimiert ist.

2. System nach Anspruch 1, **dadurch gekennzeichnet, dass** mindestens ein Parkplatzsensor (30) als 2D-Kamera oder als 3D-Kamera ausgebildet ist.

3. System nach einem der Ansprüche 1 oder 2, **dadurch gekennzeichnet, dass** der oder die Parkplatzsensoren (30) des Parkplatzüberwachungssystems derart angeordnet sind, dass der Erfassungsbereich (34) des Parkplatzüberwachungssystems eine maximale Anzahl von Parkplätzen (24) und/oder alle Zufahrtswege und Manövrierbereiche erfasst.

4. System nach einem der Ansprüche 1 bis 3, **dadurch gekennzeichnet, dass** das System Mittel zur Bestimmung der geometrischen Abmessungen, insbesondere der Höhe, des Fahrzeugs (10) umfasst.

5. Verfahren zur Auslegung eines Valet-Parking Systems, wobei das Valet-Parking System nach einem der Ansprüche 1 bis 4 ausgebildet ist, **dadurch gekennzeichnet, dass** die Anzahl und Platzierung der Parkplatzsensoren (30) des Parkplatzüberwachungssystems derart gewählt werden, dass stets eine ausreichende Erfassung des Belegungszustands aller Parkplätze (24) des vorgegebenen Parkraums (20) und/oder aller Positionen der autonom fahrenden oder wartenden Fahrzeuge (10) gegeben ist.

6. Verfahren nach Anspruch 5 **dadurch gekennzeichnet, dass** die Parkplatzsensoren (30) platziert werden, indem eine Belegung des vorgegebenen Parkraums (20) mit Fahrzeugen (50, 60) einer durchschnittlichen Größenverteilung angenommen wird.

7. Verfahren nach einem der Ansprüche 5 oder 6 **dadurch gekennzeichnet, dass** bei der Bestimmung der Anzahl und der Platzierung der Parkplatzsensoren (30) geometrische Eigenschaften des vorgegebenen Parkraums und möglicher Sichtverdeckungen (26) berücksichtigt werden.

8. Valet-Parking-Verfahren zum automatischen Verbringen eines Fahrzeugs zu einem zugewiesenen Parkplatz innerhalb eines vorgegebenen Parkraums, wobei
der aktuelle Belegungszustand der Parkplätze (24) des Parkraums (20) und/oder die aktuelle Position autonom fahrenden oder wartender Fahrzeuge (10) innerhalb des Parkraums (20) durch ein Parkplatzüberwachungssystem mit mindestens einen Parkplatzsensor (30) fortlaufend erfasst wird und der aktuelle Belegungszustand und/oder die aktuelle Position der innerhalb des vorgegebenen Parkraums (20) autonom fahrenden oder wartenden Fahrzeuge (10) an eine zentrale Steuereinheit (15) übermittelt wird,
wobei die zentrale Steuereinheit (15) einem Fahrzeug (10) einen freien Parkplatz (24') zuweist und Informationen an das Fahrzeug zu übermittelt, so dass das Fahrzeug (10) entlang einer Trajektorie (40) autonom zu dem zugewiesenen Parkplatz (24') verbracht werden kann, wobei die Zuweisung eines freien Parkplatzes (24) und/oder eine Zuweisung einer Trajektorie (40) an das Fahrzeug (10) abhängig von der Größe, insbesondere der Höhe, des Fahrzeugs erfolgt,
**dadurch gekennzeichnet, dass** die Zuweisung eines freien Parkplatzes (24) und/oder eine Zuweisung einer Trajektorie (40) an das Fahrzeug (10) derart erfolgt, dass eine Verdeckung des Erfassungsbereichs (34) der Parkplatzsensoren (30) durch das Fahrzeug (10, 50, 60) während und/oder nach dem Parkvorgang minimiert wird.

9. Verfahren nach Anspruch 8, **dadurch gekennzeichnet, dass** die geometrischen Abmessungen, insbesondere der Höhe, des Fahrzeugs (10) vor der Zuweisung eines Parkplatzes (24') gemessen werden.

10. Verfahren nach Anspruch 8, **dadurch gekennzeichnet, dass** die geometrischen Abmessungen, insbesondere der Höhe, des Fahrzeugs (10) vor der Zuweisung eines Parkplatzes (24') bestimmt werden, indem der Fahrzeugtyp erkannt wird und die geometrischen Abmessungen aus einer in der zentralen Steuereinheit hinterlegten Tabelle entnommen werden.

## Claims

1. Valet parking system for automatically bringing a vehicle (10, 50, 60) to an allocated parking space (24) inside a predefined parking area (20), comprising a central control unit (15) and a parking space monitoring system having at least one parking space sensor (30) arranged in a stationary manner, wherein the parking space monitoring system is designed to capture the occupancy status of the parking spaces (24) in the parking area (20) and to transmit the current occupancy status to the central control unit (15) and/or to locate vehicles (10) autonomously driving or waiting inside the predefined parking area (20) and to transmit information relating to the current vehicle position to the central control unit (15),
wherein the central control unit (15) is designed to allocate a free parking space (24) to a vehicle (10, 50, 60) and to transmit information to the vehicle (10, 50, 60), with the result that the vehicle (10, 50, 60) can be autonomously brought to the allocated parking space (24) along a trajectory (40),
wherein a free parking space (24) is allocated to the vehicle depending on the geometrical dimensions, in particular the height, of the vehicle (10, 50, 60), **characterized in that** a free parking space (24) is allocated to the vehicle in such a manner that concealment of the capture region (34) of the parking space sensors (30) of the parking space monitoring system by the parked vehicle (50, 60) is minimized.

2. System according to Claim 1, **characterized in that** at least one parking space sensor (30) is in the form of a 2-D camera or a 3-D camera.

3. System according to either of Claims 1 and 2, **characterized in that** the parking space sensor(s) (30) of the parking space monitoring system is/are arranged in such a manner that the capture region (34) of the parking space monitoring system captures a maximum number of parking spaces (24) and/or all access routes and manoeuvring regions.

4. System according to one of Claims 1 to 3, **characterized in that** the system comprises means for determining the geometrical dimensions, in particular the height, of the vehicle (10).

5. Method for designing a valet parking system, wherein the valet parking system is designed according to one of Claims 1 to 4, **characterized in that** the number and placement of the parking space sensors (30) of the parking space monitoring system are selected in such a manner that there is always sufficient capture of the occupancy status of all parking spaces (24) in the predefined parking area (20) and/or of all positions of the autonomously driving or waiting vehicles (10).

6. Method according to Claim 5, **characterized in that** the parking space sensors (30) are placed by assuming that the predefined parking area (20) is occupied by vehicles (50, 60) of an average size distribution.

7. Method according to either of Claims 5 and 6, **characterized in that** geometrical properties of the predefined parking area and possible visual concealments (26) are taken into account when determining the number and placement of the parking space sensors (30).

8. Valet parking method for automatically bringing a vehicle to an allocated parking space inside a predefined parking area, wherein
the current occupancy status of the parking spaces (24) in the parking area (20) and/or the current position of autonomously driving or waiting vehicles (10) inside the parking area (20) is/are continuously captured by a parking space monitoring system having at least one parking space sensor (30), and the current occupancy status and/or the current position of the vehicles (10) autonomously driving or waiting inside the predefined parking area (20) is/are transmitted to a central control unit (15),
wherein the central control unit (15) allocates a free parking space (24') to a vehicle (10) and transmits information to the vehicle, with the result that the vehicle (10) can be autonomously brought to the allocated parking space (24') along a trajectory (40), wherein a free parking space (24) and/or a trajectory (40) is/are allocated to the vehicle (10) depending on the size, in particular the height, of the vehicle,
**characterized in that** a free parking space (24) and/or a trajectory (40) is/are allocated to the vehicle (10) in such a manner that concealment of the capture region (34) of the parking space sensors (30) by the vehicle (10, 50, 60) during and/or after the parking operation is minimized.

9. Method according to Claim 8, **characterized in that** the geometrical dimensions, in particular the height, of the vehicle (10) are measured before allocating a parking space (24').

10. Method according to Claim 8, **characterized in that** the geometrical dimensions, in particular the height, of the vehicle (10) are determined before allocating a parking space (24') by detecting the type of vehicle and taking the geometrical dimensions from a table stored in the central control unit.

## Revendications

1. Système de voiturier automatique pour transférer automatiquement un véhicule (10, 50, 60) à une place de stationnement attribuée (24) à l'intérieur d'un espace de stationnement (20) prédéfini, comprenant une unité de commande centrale (15) et un système de surveillance de places de stationnement doté d'au moins un capteur de place de stationnement (30) disposé de manière fixe, le système de surveillance de places de stationnement étant réalisé pour détecter l'état d'occupation des places de stationnement (24) de l'espace de stationnement (20) et pour transmettre l'état d'occupation actuel à l'unité de commande centrale (15), et/ou pour localiser des véhicules (10) circulant de manière autonome ou en attente, et pour transmettre des informations concernant la position de véhicule actuelle à l'unité de commande centrale (15),
l'unité de commande centrale (15) étant réalisée pour attribuer une place de stationnement libre (24) à un véhicule (10, 50, 60) et pour transmettre des informations au véhicule (10, 50, 60) de sorte que le véhicule (10, 50, 60) peut être transféré de manière autonome le long d'une trajectoire (40) jusqu'à la place de stationnement attribuée (24),
l'attribution d'une place de stationnement libre (24) au véhicule étant effectuée en fonction des dimensions géométriques, en particulier de la hauteur, du véhicule (10, 50, 60),
**caractérisé en ce que** l'attribution d'une place de stationnement libre (24) au véhicule est effectuée de façon à minimiser une obstruction de la zone de détection (34) des capteurs de place de stationnement (30) du système de surveillance de places de stationnement par le véhicule en stationnement (50, 60) .

2. Système selon la revendication 1, **caractérisé en ce qu'**au moins un capteur de place de stationnement (30) est réalisé sous forme de caméra 2D ou de caméra 3D.

3. Système selon l'une quelconque des revendications 1 ou 2, **caractérisé en ce que** le(s) capteur(s) de place de stationnement (30) du système de surveillance de places de stationnement est/sont disposé(s) de telle sorte que la zone de détection (34) du système de surveillance de places de stationnement détecte un nombre maximal de places de stationnement (24) et/ou toutes les voies d'accès et zones de manœuvre.

4. Système selon l'une quelconque des revendications 1 à 3, **caractérisé en ce que** le système comprend des moyens pour déterminer les dimensions géométriques, en particulier la hauteur, du véhicule (10).

5. Procédé de conception d'un système de voiturier automatique, le système de voiturier automatique étant réalisé selon l'une quelconque des revendications 1 à 4, **caractérisé en ce que** le nombre et le placement des capteurs de place de stationnement (30) du système de surveillance de places de stationnement sont sélectionnés de telle sorte qu'une détection suffisante de l'état d'occupation de toutes les places de stationnement (24) de l'espace de stationnement (20) prédéfini et/ou de toutes les positions des véhicules circulant de manière autonome ou en attente (10) est toujours donnée.

6. Procédé selon la revendication 5, **caractérisé en ce que** les capteurs de place de stationnement (30) sont placés en supposant une occupation de l'espace de stationnement (20) prédéfini par des véhicules (50, 60) ayant une distribution de tailles moyenne.

7. Procédé selon l'une quelconque des revendications 5 ou 6, **caractérisé en ce que** lors de la détermination du nombre et du placement des capteurs de place de stationnement (30), des propriétés géométriques de l'espace de stationnement prédéfini et des obstructions visuelles possibles (26) sont prises en compte.

8. Procédé de voiturier automatique pour transférer automatiquement un véhicule à une place de stationnement attribuée à l'intérieur d'un espace de stationnement prédéfini, dans lequel
l'état d'occupation actuel des places de stationnement (24) de l'espace de stationnement (20) et/ou la position actuelle de véhicules circulant de manière autonome ou en attente (10) à l'intérieur de l'espace de stationnement (20) sont détectés en continu par un système de surveillance de places de stationnement doté d'au moins un capteur de place de stationnement (30), et l'état d'occupation actuel et/ou la position actuelle des véhicules (10) circulant de manière autonome ou en attente à l'intérieur de l'espace de stationnement (20) prédéfini sont transmis à une unité de commande centrale (15),
l'unité de commande centrale (15) attribuant une place de stationnement libre (24') à un véhicule (10) et transmettant des informations au véhicule de sorte que le véhicule (10) peut être transféré de manière autonome le long d'une trajectoire (40) jusqu'à la place de stationnement attribuée (24'), l'attribution d'une place de stationnement libre (24) et/ou une attribution d'une trajectoire (40) au véhicule (10) étant effectuées en fonction de la taille, en particulier de la hauteur, du véhicule,
**caractérisé en ce que** l'attribution d'une place de stationnement libre (24) et/ou une attribution d'une trajectoire (40) au véhicule (10) sont effectuées de façon à minimiser une obstruction de la zone de détection (34) des capteurs de place de stationnement (30) par le véhicule (10, 50, 60) pendant et/ou après le processus de stationnement.

9. Procédé selon la revendication 8, **caractérisé en ce que** les dimensions géométriques, en particulier la hauteur, du véhicule (10) sont mesurées avant l'attribution d'une place de stationnement (24').

10. Procédé selon la revendication 8, **caractérisé en ce que** les dimensions géométriques, en particulier la hauteur, du véhicule (10) sont déterminées avant l'attribution d'une place de stationnement (24') **en ce que** le type de véhicule est reconnu et les dimensions géométriques sont extraites d'un tableau mémorisé dans l'unité de commande centrale.
